(19) **Europäisches Patentamt / European Patent Office / Office européen des brevets**

(11) **EP 4 770 215 A1**

(12) **EUROPEAN PATENT APPLICATION**
published in accordance with Art. 153(4) EPC

(43) Date of publication:
01.07.2026 Bulletin 2026/27

(21) Application number: 24859605.8

(22) Date of filing: 22.08.2024

(51) International Patent Classification (IPC):
H04W 52/38 (2009.01)     H04W 16/28 (2009.01)
H04W 24/10 (2009.01)     H04W 36/08 (2009.01)
H04W 52/22 (2009.01)     H04W 72/231 (2023.01)

(52) Cooperative Patent Classification (CPC):
H04W 16/28; H04W 24/10; H04W 36/08;
H04W 52/22; H04W 52/38; H04W 72/231

(86) International application number:
PCT/JP2024/029849

(87) International publication number:
WO 2025/047572 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023 JP 2023137356

(71) Applicant: NTT DOCOMO, INC.
Tokyo 100-6150 (JP)

(72) Inventors:
• OKUMURA, Mamoru
  Tokyo 100-6150 (JP)

• SHIBAIKE, Naoya
  Tokyo 100-6150 (JP)
• MATSUMURA, Yuki
  Tokyo 100-6150 (JP)
• HARADA, Hiroki
  Tokyo 100-6150 (JP)
• WANG, Jing
  Beijing, 100190 (CN)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57) A terminal according to an aspect of the present disclosure includes: a receiving section that receives a cell switch command including information related to a target cell to be a candidate for serving cell switching; and a control section that controls path loss calculation, based on a measurement result of a reference signal before or after reception of the cell switch command.

**Certain time is may be set.**

| Cell switch command | | RS | RS | ... | RS |

This measurement result can be used for calculation of path loss.

FIG. 17

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency, and the like (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

It is assumed that, in future radio communication systems (for example, radio communication systems later than Rel. 17/5G), communication is controlled based on inter-cell mobility with a plurality of cells including a non-serving cell or inter-cell mobility using a plurality of transmission/reception points (for example, multi-TRP (MTRP)). It is also assumed that, in such inter-cell mobility, a candidate cell is configured and switch/switching between a serving cell and the candidate cell is performed by using L1/L2 signaling.

For example, in LTM in Rel. 18, a PDCCH order-based RACH (PDCCH ordered RACH) without RAR is supported for a candidate cell. Meanwhile, as a candidate cell, a serving cell can be configured.

In this case, a method of path loss calculation/power control remains unclear. If such a method of path loss calculation/power control is not clear, no appropriate random access procedure may be performed, resulting in communication throughput reduction.

In view of this, an object of the present disclosure is to make a method of path loss calculation/power control clear and provide a terminal, a radio communication method, and a base station that enable communication to be appropriately controlled. Solution to Problem

A terminal according to an aspect of the present disclosure includes: a receiving section that receives a cell switch command including information related to a target cell to be a candidate for serving cell switching; and a control section that controls path loss calculation, based on a measurement result of a reference signal before or after reception of the cell switch command.

Advantageous Effects of Invention

An aspect of the present disclosure makes a method of path loss calculation/power control clear and enables communication to be appropriately controlled.

Brief Description of Drawings

[FIG. 1] FIG. 1A is a diagram to show an example of movement of a UE in Rel. 17. FIG. 1B is a diagram to show an example of movement of a UE in Rel. 18.

[FIG. 2] FIG. 2 is a diagram to show an example of LTM procedure.

[FIG. 3] FIG. 3 is a diagram to show an example of comparison between L3 handover and Rel-18 LTM.

[FIG. 4] FIG. 4 is a diagram to show an example of association between a serving cell and a candidate cell.

[FIG. 5] FIG. 5A is a diagram to show a first example of option 2 for candidate cell configuration. FIG. 5B is a diagram to show a second example of option 2 for the candidate cell configuration.

[FIG. 6] FIG. 6 is a diagram to show example 1 of serving cell switching.

[FIG. 7] FIG. 7 is a diagram to show example 2 of the serving cell switching.

[FIG. 8] FIG. 8 is a diagram to show example 3 of the serving cell switching.

[FIG. 9] FIG. 9 is a diagram to show an outline of L1L2-triggered mobility (LTM).

[FIG. 10] FIG. 10 is a diagram to show a PDCCH indication-based RACH (PDCCH ordered RACH) with random access response (RAR) monitoring for a serving cell.

[FIG. 11] FIG. 11 is a diagram to show a PDCCH indication-based RACH (PDCCH ordered RACH) without random access response (RAR) monitoring for a candidate cell.

[FIG. 12] FIG. 12 is a diagram to show DCI format 1_0 that is CRC-scrambled with a C-RNTI.

[FIG. 13] FIG. 13 is a diagram to show an example of timing advance groups (TAGs) that cells included in a cell group belong to.

[FIG. 14] FIG. 14 is a diagram to show an example of a MAC CE for timing advance command.

[FIG. 15] FIG. 15 is a diagram to show another example of the MAC CE for timing advance command.

[FIG. 16] FIG. 16 is a diagram to show an example of a configuration of TAGs for a case where association of a TAG ID with a candidate cell is supported.

[FIG. 17] FIG. 17 is a diagram to show an example of path loss calculation according to a first embodiment.

[FIG. 18] FIG. 18 is a diagram to show an example of path loss calculation according to a second embodiment.

[FIG. 19] FIG. 19 is a diagram to show an example of path loss calculation according to a third embodiment.

[FIG. 20] FIG. 20 is a diagram to show an example of calculation related to power ramping according to a fifth embodiment.

[FIG. 21] FIG. 21 is a diagram to show an example of a schematic structure of a radio communication system according to one embodiment.

[FIG. 22] FIG. 22 is a diagram to show an example of a structure of a base station according to one embodiment.

[FIG. 23] FIG. 23 is a diagram to show an example of a structure of a user terminal according to one embodiment.

[FIG. 24] FIG. 24 is a diagram to show an example of a hardware structure of the base station and the user terminal according to one embodiment.

[FIG. 25] FIG. 25 is a diagram to show an example of a vehicle according to one embodiment.

Description of Embodiments

(TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of them) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:

- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

(L1/L2 Inter-Cell Mobility)

As described above, it is studied that the UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

<Scenario 1>

Scenario 1 corresponds to, for example, inter-cell mobility for multi-TRP, but may be a scenario not corresponding to inter-cell mobility for multi-TRP.

(1) The UE receives, from the serving cell, a configuration of an SSB for beam measurement of a TRP corresponding to a different PCI from the serving cell and a configuration necessary for using radio resources for data transmission and reception, including resources of the different PCI.

(2) The UE performs beam measurement of the TRP corresponding to the different PCI, and reports beam measurement results to the serving cell.

(3) Based on the above report, the transmission configuration indication (TCI) state associated with the TRP corresponding to the different PCI is activated by L1/L2 signaling from the serving cell.

(4) The UE performs transmission and reception by using a UE-dedicated channel on the TRP corresponding to the different PCI.

(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

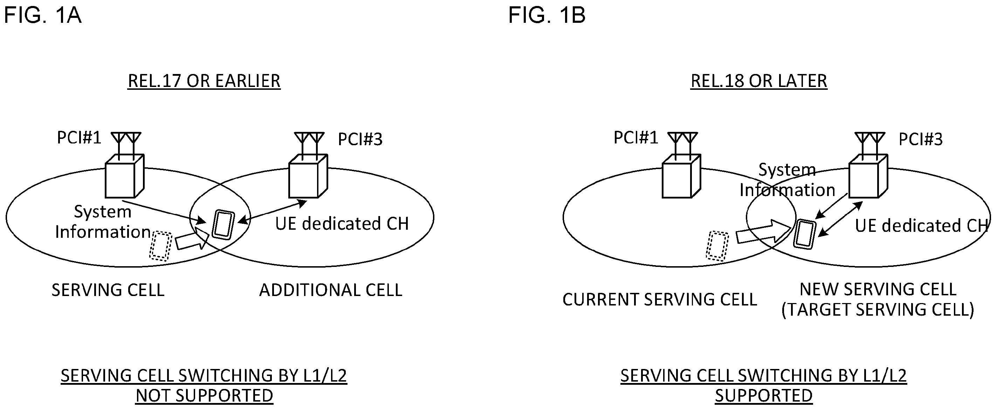

FIG. 1A is a diagram to show an example of movement of a UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

<Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.

(1) The UE receives, from the serving cell, a configuration of an SSB for a cell (additional cell) having a different PCI for beam measurement/serving cell change.

(2) The UE performs beam measurement of the cell using the different PCI, and reports measurement results to the serving cell.

(3) The UE may receive a configuration (serving cell configuration) of the cell having the different PCI by higher layer signaling (for example, RRC). In other words, a preconfiguration related to serving cell change may be performed. The configuration may be performed together with or may be performed separately from the configuration in (1).

(4) Based on the above report, the TCI state of the cell having the different PCI may be activated by L1/L2 signaling according to the serving cell change. The TCI state activation and the serving cell change may be separately performed.

(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of a UE in Rel. 18. In Rel. 18, the serving cell is switched by L1/L2 (for example, DCI/MAC CE). The UE can receive/transmit a UE-dedicated channel/common channel from/to a new serving cell (or a target serving cell). The UE may go out of the coverage of the current serving cell.

<L1L2-Triggered Mobility (LTM) Procedure>

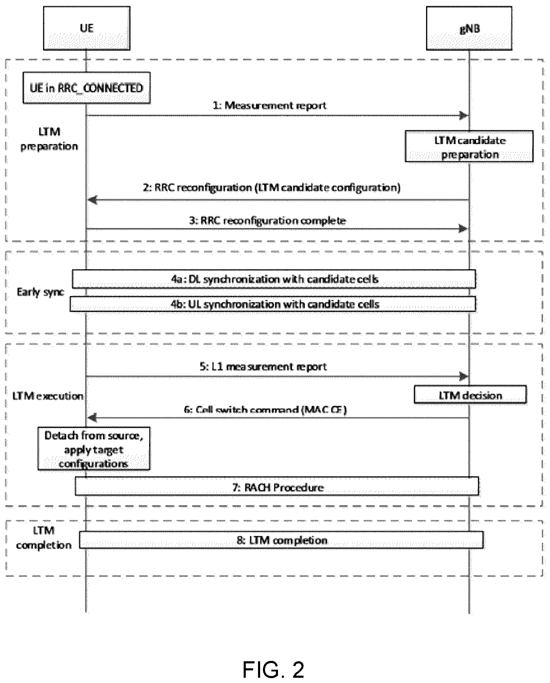

FIG. 2 is a diagram to show an example of LTM procedure. Note that L1/L2 inter-cell mobility and L1L2-triggered mobility (LTM) may be interchangeably interpreted. Note that the procedure of FIG. 2 is procedure corresponding to scenario 2 above. Respective procedures of FIG. 2 will be described in detail below.

1: The UE transmits, to a base station (gNB), a "MeasurementReport" message after RRC connection. The gNB determines to use LTM, based on MeasurementReport, and starts to prepare candidate cells.

2: The gNB transmits, to the UE, an "RRCReconfiguration" message including an LTM candidate cell configuration for one or a plurality of candidate cells.

3: The UE stores the received LTM candidate cell configuration, and transmits, to the gNB, an "RRCReconfigurationComplete" message.

4a/4b: Before receiving a cell switch command, the UE performs DL/UL synchronization with the candidate cells and acquires a timing advance (TA).

5: The UE performs L1 measurement for the configured candidate cells, and transmits, to the gNB, a measurement report in a lower layer (physical layer, L1). Note that the UE may transmit the measurement report to the gNB before the UL synchronization with the candidate cells. The step of 5 may be performed between 4a/4b described above.

Between steps of 4b and 5, activation of a TCI state may be performed between the UE and the current serving cell.

6: The gNB determines to perform cell switching to a target cell, and transmits, to the UE, a MAC CE for triggering cell switching, the MAC CE including a candidate configuration index of the target cell. This switches a cell configuration for the UE to a configuration of the target cell.

7: When cell switching is required to include random access procedure, the UE performs random access procedure for the target cell. Note that the UE may perform random access procedure in response to a RACH procedure request from the gNB.

8: The UE notifies the gNB that cell switching to the target cell has been completed successfully.

Note that the UE may perform, for the next LTM cell switching, steps 4 to 8 above a plurality of times, based on the LTM candidate cell configuration received in step 2.

<Reduction in Interruption Time>

In Rel-18 L1/L2 inter-cell mobility (for example, scenario 2 above), the UE can reduce a time without data transmission (interruption time). Application of Rel-18 LTM allows the time without data transmission (interruption time) to be reduced as compared with a method of handover based on an L3 measurement result (L3 handover). Respective specific processings will be described below.

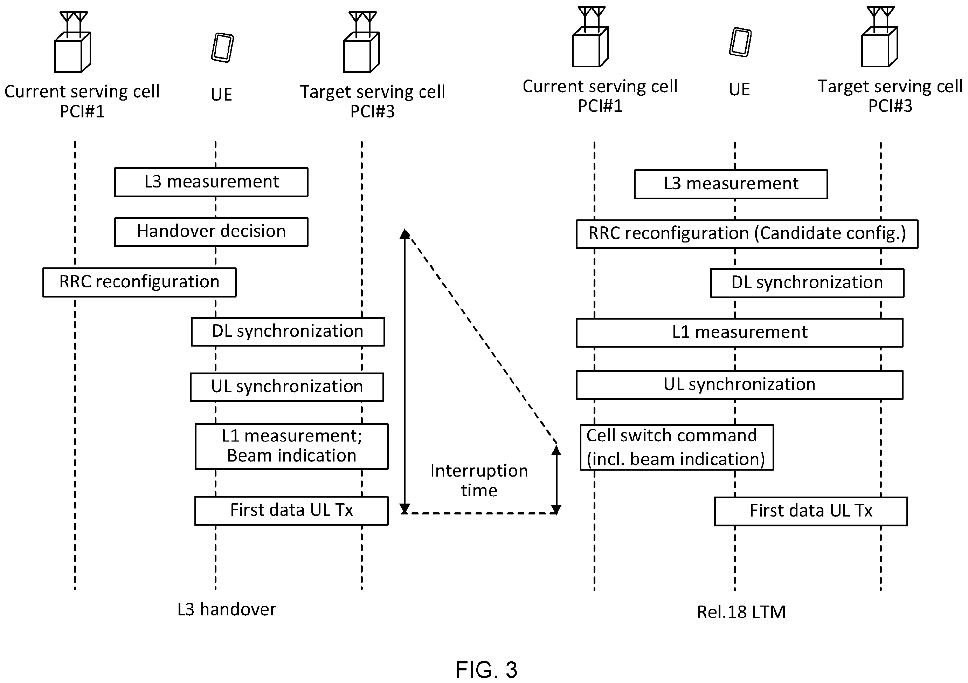

FIG. 3 is a diagram to show an example of comparison between L3 handover and Rel-18 LTM. In a case of the L3 handover, a UE first performs L3 measurement, and determines to perform handover, based on a result of the measurement. Then, the UE and a current serving cell perform RRC reconfiguration. Then, the UE performs DL synchronization and UL synchronization with a target serving cell. The UE performs L1 measurement/reporting for the target serving cell, and transmits the first UL data to the target serving cell after receiving a beam indication. In this case, the UE performs no UL data transmission during the period from the determination of the handover to the transmission of the first UL data (interruption time).

In a case of the Rel-18 LTM, the UE first performs L3 measurement. Then, the UE, the current serving cell, and the target serving cell perform RRC reconfiguration. Then, the UE performs DL synchronization with the target serving cell. Then, the UE performs L1 measurement/reporting for the current serving cell and the target serving cell, and performs UL synchronization. Then, the current serving cell transmits, to the UE, a cell switch command (including a beam indication) via L1/L2 (DCI/MAC CE). Then, the UE transmits the first UL data to the target serving cell. In this case, the period from reception of the cell switch command to the transmission of the first UL data is an interruption time for the UL transmission, and the interruption time is shorter than that of the case of the L3 handover.

(Configuration of Plurality of Candidate Cells)

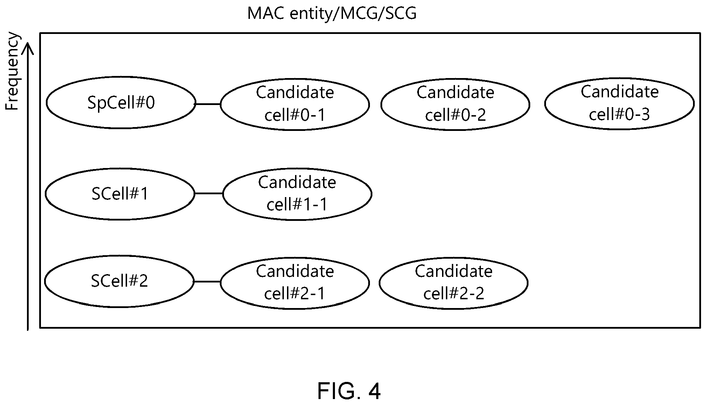

FIG. 4 is a diagram to show an example of association between the serving cell and a candidate cell. Assume that SpCell #0, SCell #1, or SCell #2 is the serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this manner, one or more candidate cells (candidate serving cells) may be associated with the serving cell.

For configuration of cells as candidates (candidate cells) when the serving cell is changed, options 1 and 2 below are considered, for example.

<Option 1>

As in inter-cell mobility of Rel. 17, information in a serving cell configuration (ServingCellConfig) may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added below the serving cell configuration (ServingCellConfig) to add PCI configuration information. mimoParam-r17 may include additionalPCI-ToAddModList-r17 as an information list of additional SSBs having PCIs different from a PCI of the serving cell. The same configuration as that for the serving cell may be applied to the candidate cells (additional cells, cells with additionalPCI), except for some information.

<Option 2>

A plurality of candidate cells may be provided with a full configuration (for example, ServingCellConfig) corresponding to the respective cells, and may be associated with each serving cell by reusing a carrier aggregation (CA) configuration framework. In other words, the candidate cells may not share configuration information with the serving cell, and may be provided with another configuration. The UE is provided with a full configuration for the respective candidate cells, and thus can perform appropriate communication with the candidate cell.

The CA configuration framework can configure an SpCell and add a plurality of SCells, for each cell group. Reusing the CA framework may configure a serving cell and configure a plurality of candidate cells, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is considered that this method is beneficial for reducing complexity of UE operation.

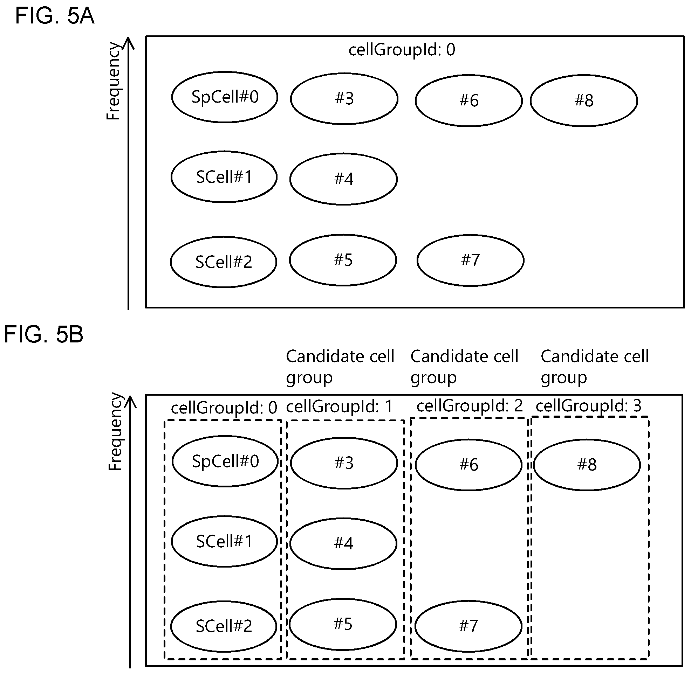

FIG. 5A is a diagram to show a first example of option 2 for candidate cell configuration. In the example of FIG. 5A, a common candidate cell pool for cell switching in an MCG/SCG is applied to candidate cells. In other words, the candidate cells are handled as one pool (group) irrespective of a frequency band.

FIG. 5B is a diagram to show a second example of option 2 for the candidate cell configuration. In the example of FIG. 5B, a plurality of cell groups are configured, and cell group switching can be performed by L1/L2 signaling. Candidate cell(s) is configured for each cell group, and a configuration of each group includes indices of corresponding SpCell and SCell.

(Signaling for Serving Cell Change Indication)

Implicit or explicit signaling for serving cell change indication will be described.

{Aspect 1}

In aspect 1, implicit signaling for serving cell change indication will be described.

{{Option 1-1}}

When a specific control resource set (CORESET) (for example, at least one of CORESET #0, a CORESET with a CH5 Type 0-CSS, and a CORESET with a CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may judge to change the serving cell to another cell (cell x, cell having a different PCI). In other words, this activation may implicitly indicate that the serving cell is changed to another cell.

In this case, the UE may update, to the same TCI state as the activated TCI state above, a beam for another CORESET ID, another CORESET using CH6/CH7/CH8, or another CORESET using a CSS.

{{Option 1-2}}

In a case where, when the MAC CE activates/deactivates PDSCH TCI states, all the TCI states activated by the MAC CE are associated with same cell x having a PCI different from the PCI of the serving cell, the UE may judge to change the serving cell to another cell (cell x). In other words, this association may implicitly indicate that the serving cell is changed to another cell.

In a case where this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

{{Option 1-3}}

In a case where the MAC CE activates/deactivates unified TCI states (corresponding to a unified TCI framework of Rel. 17, for example) and where all the activated unified TCI states are associated with same cell x having a different PCI, the UE may judge to change the serving cell to another cell (cell x). In other words, this association may implicitly indicate that the serving cell is changed to another cell.

{Aspect 2}

In aspect 2, explicit signaling for serving cell change indication will be described. Scenario 2 described above is applied to aspect 2, for example.

{{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of a serving cell may be interchangeably interpreted.

The UE may receive a new MAC CE used for activation/deactivation of a non-serving cell and including at least one of fields (information) indicating (1) to (3) below corresponding to a non-serving cell. The UE may, when receiving the MAC CE, judge to change the serving cell to another cell (non-serving cell). The UE may control, based on the information, DL/UL signal transmission and reception to and from the non-serving cell. Note that the non-serving cell may be one or a plurality of non-serving cells. In the example to be described below, a MAC CE including a plurality of fields indicating a plurality of non-serving cell indices is applied.

(1) Serving cell ID.
(2) BWP ID.
(3) Non-serving cell ID used for activation. The non-serving cell ID may be replaced with any information (with which the non-serving cell can be identified) corresponding to the non-serving cell.

As an example of (3), any one of (3-1) to (3-5) may be applied, for example.

(3-1) PCI (PCI to be directly used). For example, 10 bits are used.
(3-2) Re-indexing index (new ID) of non-serving cell. The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. A size (the number of bits) of the bitmap may be the same as the number of non-serving cells configured in this CC. For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, so that the UE can recognize, in a target cell (serving cell after change), a DL beam to be monitored. By using the TCI state/SSB/CSI-RS, the UE may create a beam report (CSI report) and transmit the created report.

{{Option 2-2}}

The UE may receive a MAC CE obtained by adding a new 1-bit field "C" to an existing MAC CE. The field indicates whether change of a serving cell is performed. The UE may receive the MAC CE, and may judge, based on the field, whether to change the serving cell to another cell.

{{Option 2-3}}

For the MAC CE in option 2-2, the MAC CE may further include a field indicating a serving cell index/PCI/another ID (the above-described new ID of option 2-1 or the like), or a field for a TCI state/SSB/CSI-RS for a target cell (serving cell after change).

In this manner, indication for serving cell change indication is indicated by a MAC CE/DCI, thereby allowing the UE to appropriately change a serving cell.

{Example 1 of Serving Cell Switching}

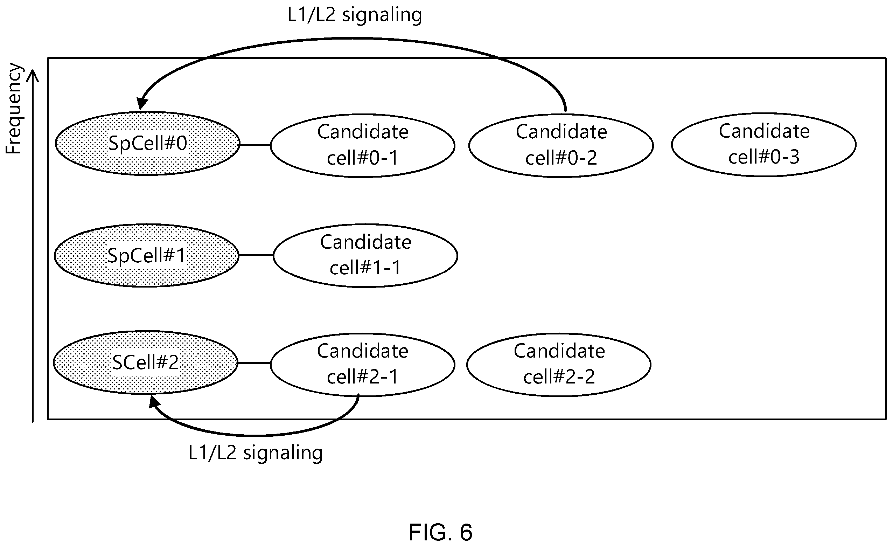

FIG. 6 is a diagram to show example 1 of the serving cell switching. For example, when L1/L2 signaling indicates, in a serving cell "SpCell #0" in an MCG/SCG, that the serving cell is changed to candidate cell #0-2, candidate cell #0-2 becomes a new serving cell "SpCell #0." For example, when L1/L2 signaling indicates, in a serving cell "SCell #2" in an MCG/SCG, that the serving cell is changed to candidate cell #2-1, candidate cell #2-1 becomes a new serving cell "SCell #2."

{Example 2 of Serving Cell Switching}

RRC/MAC CE may configure a global candidate cell ID (cell #3, ..., 8) for each cell group, band, FR, or UE. The global candidate cell ID may indicate serving cell switching to the UE.

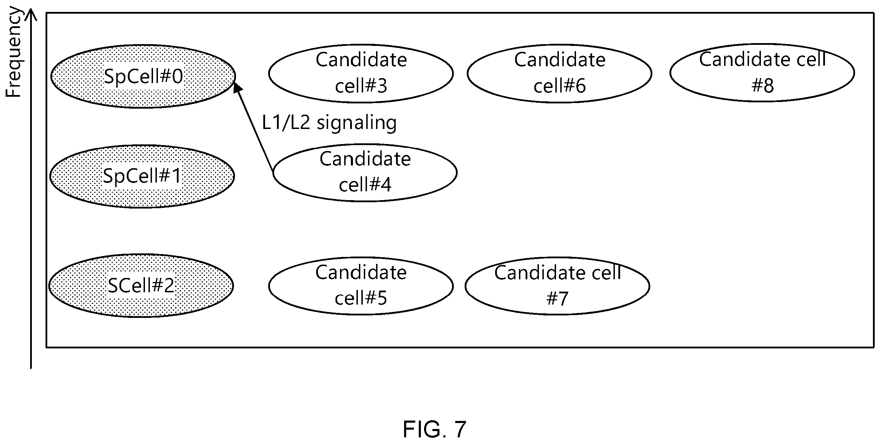

FIG. 7 is a diagram to show example 2 of the serving cell switching. As in FIG. 5A, a pool of a plurality of candidate cells is configured, and L1/L2 signaling can switch a serving cell to any (activated) candidate cell in the pool. In this case, the configured candidate cell can become either an SpCell or an SCell, based on the L1/L2 signaling.

The UE may receive an indication of serving cell change (from cell #2-1 to candidate cell #4) via a MAC CE/DCI. Indicated candidate cell #4 becomes an SpCell in a new cell group (MCG/SCG).

{Example 3 of Serving Cell Switching}

RRC/MAC CE may configure a cell group. The UE may perform serving cell switching, based on switching of the cell group.

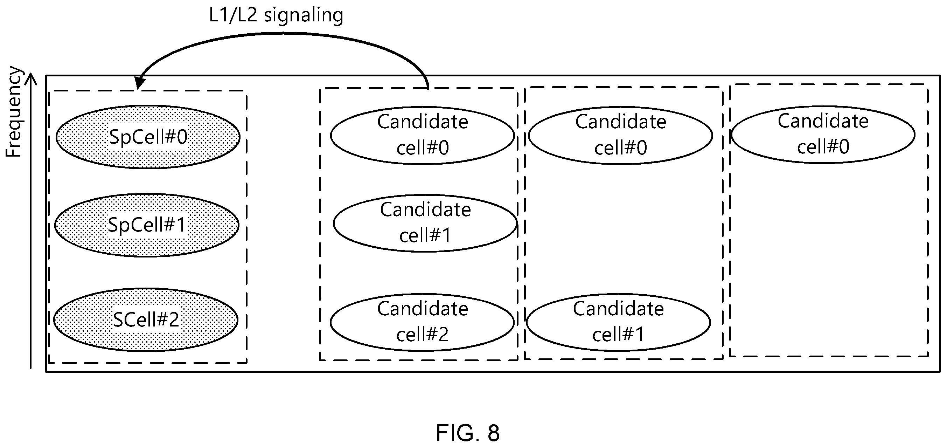

FIG. 8 is a diagram to show example 3 of the serving cell switching. The UE receives an indication of change of a cell group including a serving cell (change to candidate cell group #1), via a MAC CE/DCI. A cell included in indicated candidate cell group #1 becomes a new serving cell (SpCell, SCell). For example, candidate cells #0, #1, and #2 included in indicated candidate cell group #1 become new SpCell #0, SCell #1, and SCell #2, respectively. In other words, the serving cell group is switched.

(Outline of L1L2-Triggered Mobility (LTM))

In L1L2-triggered mobility (LTM) supported in Rel. 18 or later versions, L1 inter-frequency measurement may be supported. Before a cell switch command, DL synchronization/UL synchronization of candidate cells based at least on an SSB may be supported.

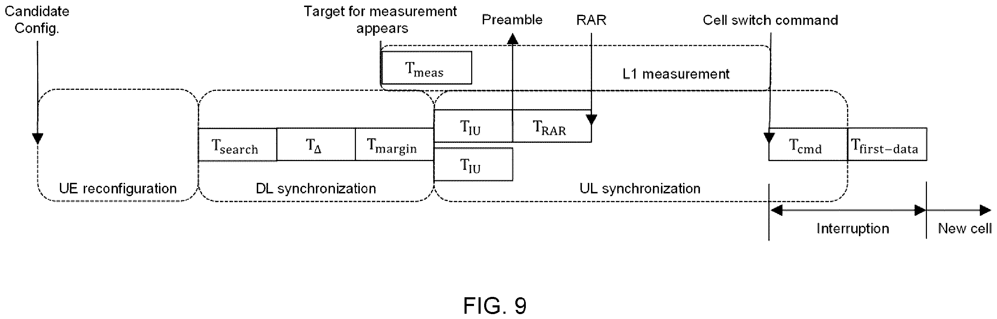

FIG. 9 is a diagram to show an outline of L1L2-triggered mobility (LTM). LTM and L1/L2 inter-cell mobility may be interchangeably interpreted.

The UE receives, from the NW, candidate cell configurations in UE reconfiguration. The UE reconfiguration includes $T_{RRC}$ and $T_{proccesing1/Tproccesing2}$. $T_{RRC}$ (for example, up to 10 ms) is a processing time for RRC reconfiguration that delivers candidate cell configurations (candidate configurations). $T_{proccesing1/Tproccesing2}$ (for example, up to 20 ms for the same FR, up to 40 ms for different FRs) are times for respective UE processings before and after a cell switch command. This may include, for some cases, L2/3 reconfiguration, RF re-tuning, baseband re-tuning, security update, if necessary, and the like.

DL synchronization includes $T_{search}$, $T_{\Delta}$, and $T_{margin}$. $T_{search}$ (for example, 0 ms in a case where a cell is known, up to 60 ms in a case where a cell is unknown) is a time necessary for a target cell search. $T_{\Delta}$ is a time for fine tracking and all timing information acquisition. $T_{margin}$ (for example, up to 2 ms) is a time for post-processing of an SSB and a CSI-RS.

L1 measurement (mesurement) includes $T_{meas}$ (SMTC periodicity, (for example, 20 ms)). $T_{meas}$ is measurement delay from the appearance of a target to a cell switch command.

UL synchronization includes $T_{IU}$, $T_{RAR}$, and $T_{cmd}$. $T_{IU}$ (for example, up to 15 ms) is a time for uncertain interruption in acquisition of the first available PRACH occasion in a new cell. $T_{RAR}$ (for example, up to 4 ms) is a time for RAR delay. $T_{cmd}$ (for example, up to 5 ms) is a time for processing of L1/L2 command (HARQ and paging).

$T_{first-data}$ after $T_{cmd}$ is a time for the UE to perform, after the RAR, the first DL reception/UL transmission on an indicated beam of a target cell.

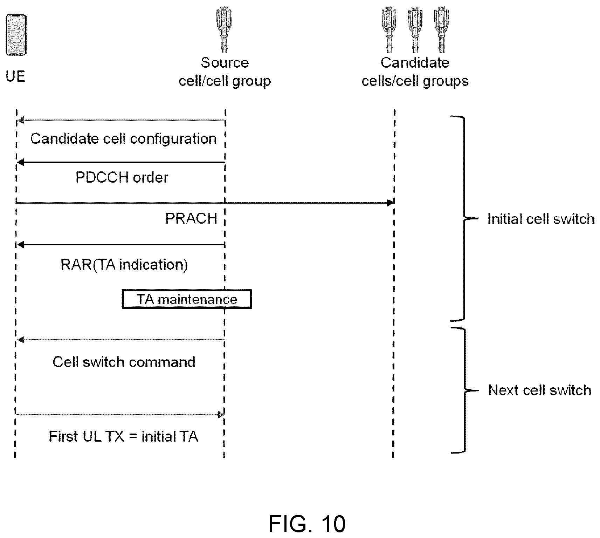

FIG. 10 is a diagram to show an example of a PDCCH order-based RACH (PDCCH ordered RACH) with RAR monitoring. Note that, in the present disclosure, a source cell and a source cell group may be interchangeably interpreted. A candidate cell and a candidate cell group may be interchangeably interpreted.

The source cell may transmit, to the UE, information related to configuration of a candidate cell (for example, candidate cell configuration information). The source cell may transmit, to the UE, a PDCCH order (for example, DCI format 1_0) used to trigger a PRACH. The PDCCH order (or DCI) may indicate a candidate cell (for example, one candidate cell)/random access occasion (RO) as a target of a PRACH trigger/transmission. For acquisition of a TAG/TA, the UE transmits, based on the PDCCH order, a PRACH in a RACH procedure to the candidate cell.

Next, the source cell transmits, to the UE, a response signal (RAR) to the PRACH. The RAR may include information related to a TA (for example, TA indication). The RAR (for example, a PDSCH including the RAR/a PDCCH for scheduling the PDSCH) may be monitored in a specific search space (for example, a common search space (CSS)) of a specific cell (for example, an SpCell) among current serving cells (only in a Distributed Unit (DU)). In the source cell, TA adjustment (for example, TA maintenance) is performed.

Next, the source cell may transmit a cell switch command to the UE. TA information may be moved/notified from the source cell to a target cell. The UE may control, based on the acquired TA, UL transmission after cell switching. For example, the UE may perform the first UL transmission by using an initial TA when UL synchronization of all candidate cells is not completed after an initial cell switch.

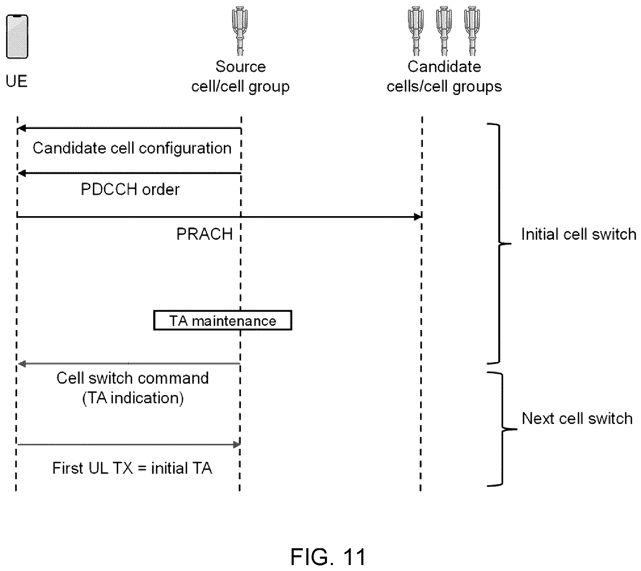

FIG. 11 is a diagram to show an example of a PDCCH order-based RACH (PDCCH ordered RACH) without RAR monitoring. Only the difference between FIG. 11 and FIG. 10 will be described.

In the example of FIG. 11, a PDCCH order used to trigger a PRAH may indicate one or more candidate cells (for example, a plurality of candidate cells)/random access occasions as a target of a PRACH trigger/transmission. The UE may transmit, based on the PDCCH order, a PRACH in a RACH procedure to the candidate cells, for acquisition of a plurality of TAGs/TAs. The source cell does not transmit a response signal (for example, RAR) to the PRACH. The source cell may indicate, to the UE, information related to a TA (for example, TA indication) by using a cell switch command.

In the present disclosure, a RACH without RAR and a RACH without RAR monitoring may be interchangeably interpreted. A RACH may be interpreted as PRACH transmission triggered by a PDCCH order. RACH procedure/PRACH transmission without RAR monitoring may be interpreted as RACH procedure/PRACH transmission not requiring RAR monitoring or RACH procedure/PRACH transmission in which RAR monitoring is not requested.

{PDCCH Order}

DCI format 1_0 includes a DCI format identifier field, a bit field always set to 1, and a frequency domain resource assignment field. In a case where a cyclic redundancy check (CRC) of DCI format 1_0 is scrambled with a C-RNTI and the frequency domain resource assignment field is all 1, such DCI format 1_0 is used for a random access procedure initiated by a PDCCH order, and the rest of the fields are of random access preamble, UL/supplementary Uplink (SUL) indicator, SS/PBCH index (SSB index), PRACH mask index, and reserved bits (12 bits).

For a PRACH transmission triggered by a PDCCH order, the PRACH mask index field indicates that, when the value of the random access preamble index field is not zero, a PRACH occasion is a PRACH occasion of a PRACH transmission associated with an SS/PBCH block index indicated in an SS/PBCH block index field of the PDCCH order.

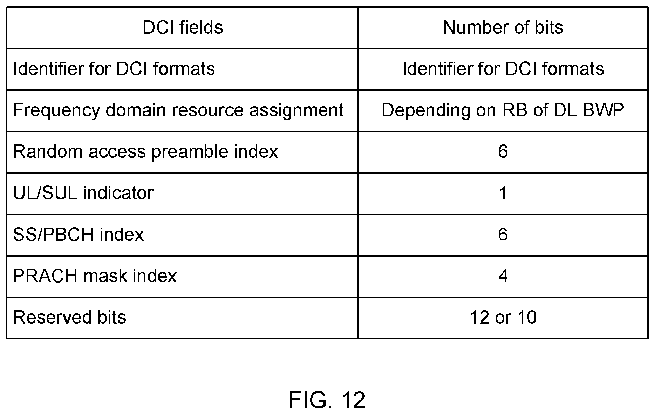

FIG. 12 is a diagram to show DCI format 1_0 that is CRC-scrambled with a C-RNTI. "Frequency domain resource assignment" may be used for a PDCCH indication-based RACH (PDCCH order), for example. For example, when "Frequency domain resource assignment" indicates all 1, this may mean that such DCI format 1_0 is used as a PDCCH order.

"Random access preamble index" may be used for Contention based Random Access (CBRA). For example, when "Random access preamble index" indicates all 0, this may mean a case of being used for CBRA. "Reserved bits" correspond to 12 bits in a case of operating in a cell with spectrum shared channel access, otherwise 10 bits.

As described above, in L1/L2-based mobility (for example, LTM) supported in Rel. 18 or later versions, acquisition of a TA for a candidate cell before a cell switch command may be supported. In a mechanism of acquisition of a TA for a candidate cell, at least a PDCCH ordered RACH may be supported. A PDCCH order may be triggered only by a source cell (for example, serving cell). A candidate cell/a RACH occasion (RO) for the candidate cell may be indicated by DCI transmitted in the PDCCH order. A configuration of a RACH resource for the candidate cell may be provided for a UE before the PDCCH order.

For the PDCCH ordered RACH, at least one of a method with RAR monitoring and a method without RAR monitoring may be applied. In a case where the method with RAR monitoring is applied, information related to a timing advance for the candidate cell (for example, TA information/TAC) may be, included in an RAR, indicated to a UE. In a case where the method without RAR monitoring is applied, information related to a timing advance for the candidate cell (for example, TA information/TAC) may be, included in a cell switch command, indicated to the UE.

(Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

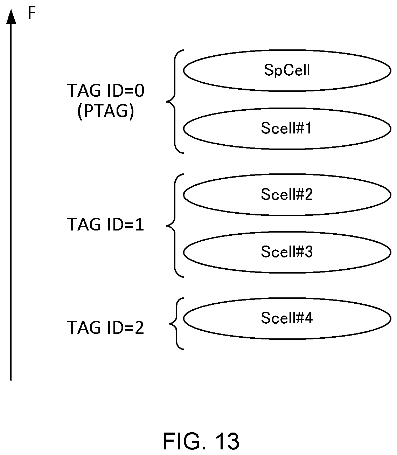

In an existing system (for example, Rel-16 NR), a configuration of four TAGs at maximum per cell group (for example, MCG/SCG) is supported (see FIG. 13). FIG. 13 shows a case where three TAGs are configured for a cell group including an SpCell and SCells #1 to #4. Here, a case is shown where the SpCell and SCell #1 belong to the first TAG (PTAG or TAG #0), SCell #2 and SCell #3 belong to the second TAG (TAG #1), and SCell #4 belongs to the third TAG (TAG #2).

A UE may be notified of a timing advance command (TA command) by using a MAC control element (for example, MAC CE). The TA command is a command indicating an uplink channel transmission timing value and is included in the MAC control element. The TA command (TAC) is signaled on a MAC layer from a radio base station to the UE. The UE controls a certain timer (for example, TA timer), based on reception of the TA command.

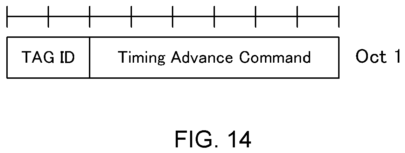

A MAC CE for timing advance command may have a structure including a field for timing advance group index (for example, TAG ID) and a field for timing advance command (see FIG. 14). The MAC CE may consist of 1 octet (= 8 bits).

The field for TAG ID (TAG ID field) may consist of 2 bits, for example. The TAG ID field may be used for indication of a TAG ID of an addressed TAG. The field for timing advance command (TAC field) may consist of 6 bits, for example. The TAC field may indicate index value $T_A$ (0, 1, 2 ..., 63) used to control timing adjustment amount/value (relative amount/relative value) that a MAC entity is required to apply. The MAC CE for timing advance command shown in FIG. 14 may be referred to as a TAC MAC CE.

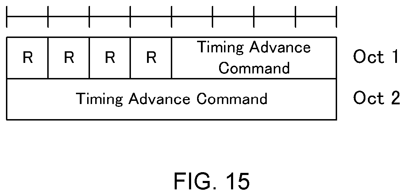

FIG. 15 is a diagram to show another example of the MAC CE for timing advance command. The MAC CE shown in FIG. 15 may be referred to as an absolute TAC MAC CE. The MAC CE may consist of 2 octets (= 16 bits). Specifically, the MAC CE may include a field (R bit field) for reserved bit (field) and a field (TAC field) for timing advance command. The R bit field (R = 0) may consist of 4 bits, for example. The TAC field may consist of, for example, 12 bits extending over 2 octets. The TAC field in FIG. 15 may indicate, similarly to that in FIG. 14, an index value used for control of actual TA amount/value (absolute amount/absolute value) that a MAC entity is required to apply. The absolute TAC MAC CE need not include the TAG ID field shown in FIG. 14.

The MAC CE shown in FIG. 14 may be used after establishment of initial access. In contrast, the MAC CE shown in FIG. 15 may be used only in initial access, included in an RAR or the like. Each field included in the MAC CE for timing advance command described above may be referred to as a field related to a TA. In this, the TAC field shown in FIG. 14 may be referred to as a TA adjustment field/a field for indication of TA adjustment/a field related to TA adjustment. The TAC field shown in FIG. 15 may be referred to as an absolute TAC field/a field for indication of an absolute TAC.

(Control of UL Transmission Based on Timing Advance)

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a certain cell (or CC). Alternatively, a case is assumed that different TRPs corresponding to a certain cell share a common TAG.

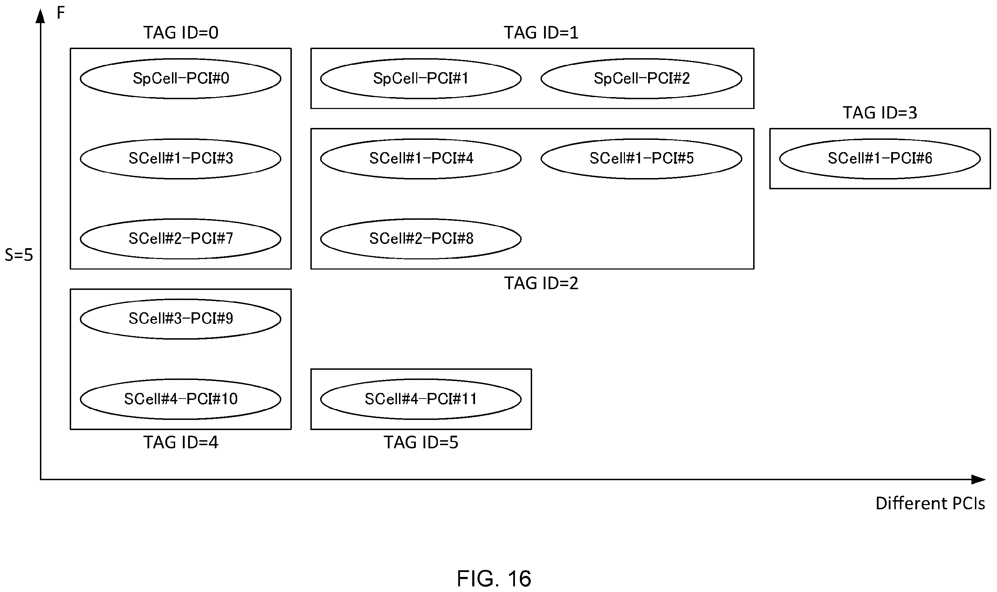

FIG. 16 is a diagram to show an example of a configuration of TAGs for a plurality of cells (or TRPs) with different PCIs.

It is assumed that M PCIs at maximum (for example, serving cells + candidate cells associated with the serving cells) are configurable per CC and a configuration of N TAGs at maximum for the M PCIs at maximum is supported (for example, N ≤ M). In this case, one or a plurality of PCIs may be associated with one TAG.

For up to S serving cells (or for S serving cells at maximum) in a cell group, one or a plurality of PCIs may be associated with one TAG. In this case, T TAGs at maximum may be configured per CC, taking account of one PCI (Case 1). In other words, T × N TAGs at maximum may be configured for M × S cells at maximum. Alternatively, U TAGs at maximum may be configured for M × S cells at maximum (Case 2).

As described above, in a case where candidate cells are configured/applied/supported, it is assumed that different serving cells/different candidate cells are associated with the same TAG. A TAG for a candidate cell may be indicated from a base station or may be judged based on a TA for the candidate cell acquired by a UE.

It is conceivable that, with respect to UL transmission for a candidate cell, the UE performs the UL transmission taking account of a TA corresponding to the candidate cell. In a case of taking account of such a TA for the candidate cell, the UE is required to perform acquisition of TAs for candidate cells (for example, TA acquisition of candidate cells).

As the TA acquisition of candidate cells, a plurality of TA acquisition methods are conceivable, such as TA acquisition using a RACH (for example, RACH-based solutions) and TA acquisition without using any RACH (RACH-less solutions). For the TA acquisition using a RACH, a method with RAR monitoring and a method without RAR monitoring may be supported. A TA acquisition method may be interpreted as a TA acquisition scheme, a TA acquisition type, or a TA acquisition procedure. In the present disclosure, TA acquisition, TA measurement, TA calculation, TA computation, and TA determination may be interchangeably interpreted.

For example, the UE may transmit, to a candidate cell, a RACH indicated/triggered by a PDCCH (for example, PDCCH ordererd RACH) to acquire a TA for the candidate cell. Information related to the TA (for example, TA value) for the candidate cell may be included in a response signal (for example, RAR) for the RACH. The RAR may be transmitted from a serving cell or may be transmitted from the candidate cell. Alternatively, with use of a RACH triggered by the UE or a RACH triggered in a higher layer from a network, the TA for the candidate cell may be acquired. A PDCCH order may be triggered only by a source cell (or serving cell).

Alternatively, the UE may transmit, to a candidate cell, a signal other than a RACH to acquire a TA for the candidate cell. Information related to the TA (for example, TA value) for the candidate cell may be indicated from a base station to the UE. As the signal other than the RACH, for example, an SRS may be applied (SRS-based TA measurement).

Alternatively, the UE may measure/calculate/acquire a TA for a candidate cell, based on DL signals (for example, downlink reference signals) transmitted from cells (for example, candidate cells/serving cells). A method that a UE acquires, based on DL signals transmitted from one or more cells, a TA for a candidate cell may be referred to as UE-based TA measurement.

In the UE-based TA measurement, downlink reference signals may be certain DL signals (for example, synchronization signal blocks (for example, SSBs)/CSI-RSs or the like). For example, the UE may measure a gap/difference between reception timings of DL signals from a plurality of cells (or two cells) to acquire a TA for a candidate cell.

The plurality of cells may include a cell to be a reference (for example, a serving cell). In this case, based on a reception timing of the reference cell (and a TA value for the reference cell) and a timing difference (for example, T) between the reference cell and a candidate cell, the UE may calculate a TA required for the candidate cell. The UE may acquire the TA for the candidate cell by using a timing advance command (TAC) transmitted from the serving cell.

(Up Ring Time Alignment Maintenance)

For keeping/maintenance of UL time alignment (Maintenance of Uplink Time Alignment), a parameter such as a time alignment timer (for example, timeAlignmentTimer) may be configured. The time alignment timer (per TAG) may control how long a MAC entity considers a serving cell belonging to the associated TAG to be UL time aligned.

Parameters corresponding to TAG IDs may be configured by using higher layer parameters. For example, parameters such as time alignment timers (for example, timeAlignmentTimer) corresponding to the respective TAG IDs may be configured. Alternatively, for serving cells, TAG IDs may be configured by using higher layer parameters (for example, tag-ID included in ServingCellConfig). Note that, after such configuration by higher layer parameters, TAG IDs/parameters may be updated by a MAC CE.

The time alignment timers may be maintained for UL time alignment. In Rel. 17, the time alignment timers may be configured for/associated with the respective TAGs. In a case of having received a MAC CE (for example, TAC MAC CE) for timing advance command, a UE starts or restarts the respective time alignment timers associated with the indicated timing advance groups (for example, TAGs).

In a case where a MAC CE for timing advance command is received and a certain value ($N_{TA}$) is maintained for the indicated TAG, a MAC entity applies a timing advance command for the indicated TAG and starts or restarts a time alignment timer associated with the indicated TAG. The certain value ($N_{TA}$) may be a timing advance between DL and UL.

In a case where a timing advance command has been received in an RAR message for a serving cell belonging to a TAG (for example, a TAG of an SpCell) or message B (for example, MSGB) for the SpCell, and if a MAC entity has not selected a random access preamble from among contention-based random access preambles, a timing advance command for the TAG may be applied and a time alignment timer associated with the TAG may be started or restarted.

In a case where, in response to message A (for example, MSGA) transmission including a certain RNTI MAC CE (for example, C-RNTI MAC CE), an absolute timing advance command is received, a timing advance command of PTAG may be applied.

Operations for a case that a time alignment timer expires may be defined separately for PTAG and STAG. Note that a timing advance group (TAG) including an SpCell of a MAC entity may be referred to as a primary timing advance group (PTAG), and a TAG other than the PTAG may be referred to as a secondary timing advance group (STAG).

For example, it is supported in Rel. 17 that, in a case where a timing advance timer corresponding to a PTAG expires, a certain PTAG operation is applied, and in a case where a timing advance timer corresponding to an STAG expires, a certain STAG operation is applied.

For example, in a case where a time alignment timer expires, the following operation (for example, certain PTAG operation/certain STAG operation) may be performed.

{Certain PTAG Operation}

In a case where a time alignment timer is associated with a PTAG:

- flush all HARQ buffers for all serving cells;
- if configured, notify RRC to release PUCCH for all serving cells;
- if configured, notify RRC to release SRS;
- clear all configured DL assignments and configured UL assignments;
- clear PUSCH resource for semi-persistent CSI reporting;
- cause all running time alignment timers to expire;
- maintain $N_{TA}$ for all TAGs.

{Certain STAG Operation}

In a case where a time alignment timer is associated with an STAG, then for all serving cells belonging to the TAG:

- flush all HARQ buffers;
- if configured, notify RRC to release PUCCH;
- if configured, notify RRC to release SRS;
- clear all configured DL assignments and UL assignments;
- clear PUSCH resource for semi-persistent CSI reporting;
- maintain $N_{TA}$ for the TAG.

(PRACH Power Control Process)

Transmit power of a preamble (PRACH) is calculated by a UE. The transmit power of the PRACH is determined with open-loop power control and power lifting/ramping mechanism. The UE calculates the transmit power, based on received power of a configuration from a network and a value of a preamble power ramping counter.

For the PDCCH order-based RACH (PDCCH ordered RACH), it is under study that, in a certain case (for example, case where RAR reception is not configured), a UE judges whether to perform power ramping on the basis of a PDCCH order.

For example, in a case where power ramping is performed, whether a PRACH is of initial transmission or of retransmission may be explicitly indicated by a PDCCH order. In the case where power ramping is performed, a power ramping-up value may be configured.

Otherwise (in a case where power ramping is not performed), transmit power of a PRACH may be determined with open-loop power control.

<PUSCH Transmission Power Control>

In NR, transmit power of a PUSCH is controlled based on a TPC command (also referred to as a value, increased/decreased value, correction value, or the like) indicated by a value of a field (also referred to as a TPC command field) in DCI.

For example, in a case where a UE transmits a PUSCH on active UL BWP b of carrier f of serving cell c by using a parameter set (open-loop parameter set) with index j and power control adjustment state (PUSCH power control adjustment state) index l, transmit power ($P_{PUSCH, b, f, c}(i, j, q_d, l)$) [dBm] of the PUSCH in PUSCH transmission occasion (also referred to as transmission period or the like) i may be based on at least one of $P_{CMAX, f, c(i)}$, $P_{O\_PUSCH, b, f, c}(j)$, $M^{PUSCH}_{RB, b, f, c}(i)$, $\alpha_{b, f, c}(j)$, $PL_{b, f, c}(q_d)$, $\Delta_{TF, b, f, c}(i)$, and $f_{b, f, c}(i, l)$, as (Equation 1) below.

(Equation 1)

$$P_{\text{PUSCH},b,f,c}(i,j,q_d,l)$$
$$= min \begin{cases} P_{\text{CMAX},f,c}(i), \\ P_{\text{O\_PUSCH}.b,f,c}(j) + 10\,log_{10}(2^{\mu} \cdot M^{\text{PUSCH}}_{\text{RB}.b,f,c}(i)) + \alpha_{b,f,c}(j) \cdot PL_{b,f,c}(q_d) \\ \quad\quad + \Delta_{\text{TF}.b,f,c}(i) + f_{b,f,c}(i,l) \end{cases}$$
$$[\text{dBm}]$$

The power control adjustment state may be referred to as a closed loop (CL)-power control (PC) state, a value based on a TPC command of power control adjustment state index l, a TPC command accumulated value, or a closed loop-based value. l may be referred to as a closed loop index.

PUSCH transmission occasion i is a period when a PUSCH is transmitted and may include one or more symbols, one or more slots, or the like, for example.

$P_{\text{CMAX, f, c}}(i)$ is, for example, maximum transmit power (configured maximum output power, UE configured maximum output power) of a user terminal configured for carrier f of serving cell c in transmission occasion i.

$P_{\text{O\_PUSCH, b, f, c}}(j)$ is, for example, a parameter related to target received power (for example, also referred to as a parameter related to a transmit power offset, transmit power offset P0, a target received power parameter, or the like) configured for active UL BWP b of carrier f of serving cell c in transmission occasion i. $P_{\text{O\_PUSCH, b, f, c}}(j)$ may be the sum of $P_{\text{O\_NOMINAL\_PUSCH, f, c}}(j)$ and $P_{\text{O\_UE\_PUSCH, b, f, c}}(j)$.

$M^{\text{PUSCH}}_{\text{RB, b, f, c}}(i)$ is, for example, the number of resource blocks (bandwidth) allocated to a PUSCH for transmission occasion i on active UL BWP b of carrier f of serving cell c and subcarrier spacing $\mu$. $\alpha_{\text{b, f, c}}(j)$ is a value provided by a higher layer parameter (for example, also referred to as msg3-Alpha, p0-PUSCH-Alpha, fractional factor, or the like).

$PL_{\text{b, f, c}}(q_d)$ is, for example, a path loss (path loss estimation [dB], path loss compensation) calculated by a user terminal by using index $q_d$ of a reference signal (RS, path loss reference RS, pathloss (PL)-RS, RS for path loss reference, path loss measurement DL-RS, PUSCH-PathlossReferenceRS) for a downlink BWP associated with active UL BWP b of carrier f of serving cell c.

In a case where the UE is not provided with the path loss reference RS (for example, PUSCH-PathlossReferenceRS) or the UE is not provided with dedicated higher layer parameters, the UE may calculate $PL_{\text{b, f, c}}(q_d)$ by using an RS resource from a synchronization signal (SS)/physical broadcast channel (PBCH) block (SS block (SSB)) used for the UE to obtain Master Information Block (MIB).

In a case where the UE is configured with a number of RS resource indices up to the value of the maximum number of path loss reference RSs (for example, maxNrofPUSCH-PathlossReferenceRSs) and a respective set of RS configurations for the RS resource indices by the path loss reference RSs, the set of RS resource indices may include one or both of a set of SS/PBCH block indices and a set of channel state information (CSI)-reference signal (RS) resource indices. The UE may identify an RS resource index $q_d$ in the set of RS resource indices.

In a case where a PUSCH transmission is scheduled by a Random Access Response (RAR) UL grant, the UE may use RS resource index $q_d$ the same as that for a corresponding PRACH transmission.

In a case where the UE is provided with a configuration of power control for a PUSCH by a sounding reference signal (SRS) resource indicator (SRI) (for example, SRI-PUSCH-PowerControl) and provided with one or more values of IDs of path loss reference RSs, the UE may obtain a mapping between a set of values for the SRI field in DCI format 0_1 and a set of path loss reference RS ID values from higher layer signaling (for example, sri-PUSCH-PowerControl-Id in SRI-PUSCH-PowerControl). The UE may determine RS resource index $q_d$ from a path loss reference RS ID mapped to a value of the SRI field in DCI format 0_1 that schedules a PUSCH.

In a case where a PUSCH transmission is scheduled by DCI format 0_0 and the UE is not provided with PUCCH spatial relation information for a PUCCH resource with a lowest index for active UL BWP b of each carrier f and serving cell c, the UE may use RS resource index $q_d$ the same as that for a PUCCH transmission in the PUCCH resource.

In a case where a PUSCH transmission is scheduled by DCI format 0_0 and the UE is not provided with a spatial setting for a PUCCH transmission, or a case where the PUSCH transmission is scheduled by DCI format 0_1 including no SRI field, or a case where a configuration of power control of a PUSCH by SRI is not provided to the UE, the UE may use RS resource index $q_d$ with a path loss reference RS ID equal to zero.

For a PUSCH transmission configured by a configured grant configuration (for example, ConfiguredGrantConfig), in a case where the configured grant configuration includes a specific parameter (for example, rrc-ConfiguredUplinkGrant), RS resource index $q_d$ may be provided to the UE by a path loss reference index (for example, pathlossReferenceIndex) in the specific parameter.

For a PUSCH transmission configured by a configured grant configuration, in a case where the configured grant configuration includes no specific parameter, the UE may determine RS resource index $q_d$ from a value of a path loss reference RS ID that is mapped to an SRI field in a DCI format activating the PUSCH transmission. In a case where the DCI format includes no SRI field, the UE may determine RS resource index $q_d$ with the path loss reference RS ID equal to zero.

$\Delta_{TF, b, f, c}(i)$ is a transmission power adjustment component (offset, transmission format compensation) for UL BWP b of carrier f of serving cell c.

$f_{b, f, c}(i, l)$ is a PUSCH power control adjustment state for active UL BWP b of carrier f of serving cell c in transmission occasion i. $f_{b, f, c}(i, l)$ may be based on $\delta_{PUSCH, b, f, c}(i, l)$.

In a case where TPC accumulation is enabled, $f_{b, f, c}(i, l)$ may be based on a $\delta_{PUSCH, b, f, c}(m, l)$ accumulated value.

In a case where TPC accumulation is disabled, $f_{b, f, c}(i, l)$ may be $\delta_{PUSCH, b, f, c}(i, l)$ (absolute value).

In a case where information (TPC-Accumulation) indicating TPC accumulation disabled is not configured (a case where the information indicating TPC accumulation disabled is not provided, a case where TPC accumulation is configured to be enabled), the UE accumulates TPC command values and determines transmit power (applies the TPC command values via the accumulation) on the basis of the accumulation result (power control state).

In a case where information (TPC-Accumulation) indicating TPC accumulation disabled is configured (a case where the information indicating TPC accumulation disabled is provided, a case where TPC accumulation is configured to be disabled), the UE the UE determines transmit power (applies TPC command values without accumulation) on the basis of the TPC command values (power control state), without accumulating the TPC command values.

$\delta_{PUSCH, b, f, c}(i, l)$ may be a TPC command value included in DCI format 0_0 or DCI format 0_1 that schedules PUSCH transmission occasion i on active UL BWP b of carrier f of serving cell c or a TPC command value jointly coded with another TPC command in DCI format 2_2 having a CRC scrambled with a specific RNTI (Radio Network Temporary Identifier) (for example, TPC-PUSCH-RNTI).

$\Sigma_{m = 0}^{C(D_i) - 1} \delta_{PUCCH, b, f, c}(m, l)$ may be the sum of TPC command values in set $D_i$ of TPC command values with group/cardinality $C(D_i)$. $D_i$ may be a set of TPC command values that the UE receives between $K_{PUSCH}(i - i_0) - 1$ symbols before PUSCH transmission occasion $i - i_0$ and $K_{PUSCH}(i)$ symbols before PUSCH transmission occasion i, on active UL BWP b of carrier f of serving cell c, for PUSCH power control adjustment state l. $i_0$ may be the minimum positive integer that makes $K_{PUSCH}(i - i_0)$ symbols before PUSCH transmission occasion $i - i_0$ earlier than $K_{PUSCH}(i)$ symbols before PUSCH transmission occasion i.

In a case where a PUSCH transmission is scheduled by DCI format 0_0 or DCI format 0_1, $K_{PUSCH}(i)$ may be the number of symbols after a last symbol of a corresponding PDCCH reception and before a first symbol of the PUSCH transmission, on active UL BWP b of carrier f of serving cell c. In a case where a PUSCH transmission is configured with configured grant configuration information (ConfiguredGrantConfig), $K_{PUSCH}(i)$ may be the number of $K_{PUSCH, min}$ symbols equal to the product of the number of symbols per slot $N_{symb}^{slot}$ and the minimum value of values provided by k2 in PUSCH common configuration information (PUSCH-ConfigCommon), on active UL BWP b of carrier f of serving cell c.

The power control adjustment state may be configured with whether to have a plurality of states (for example, two states) by a higher layer parameter or have a single state. In a case where a plurality of power control adjustment states are configured, index l (for example, $l \in \{0, 1\}$) may identify one of the plurality of power control adjustment states.

(Analysis)

As described above, in Rel-18 LTM, so-called RACH-less handover is supported that, in a case where a cell switch command includes no TA for a target cell, a UE performs no RACH procedure for the target cell after reception of the cell switch command. The RACH-less handover and the PDCCH ordered RACH without RAR described above may be interchangeably interpreted.

In this case, the UE performs UL transmission for the target cell by using a configured grant information element (IE) configured by higher layer signaling (RRC). This enables a gNB of the target cell to receive the UL transmission in specified time/frequency resources at specified power.

Incidentally, for determination of power for UL transmission (signal/channel), in an existing specification, it is required to measure a PL-RS to determine a path loss. Meanwhile, for Rel-18 LTM, in view of delay and reliability, studies are required on how power is to be configured for a target cell. For example, the following issue is assumed.

{Analysis 1}

In a case where the UE measures a path loss after reception of a cell switch command, an interruption time may be long.

{Analysis 2}

In contrast, in a case where the UE uses a result of measurement before reception of a cell switch command, this may be an incorrect measurement result, causing UL transmission to be not reached (not delivered) for a target cell (gNB). This may cause handover failure.

{Analysis 3}

After cell switching is performed using LTM, the UE performs MAC reset. In this case, however, RRC reconfiguration for LTM is not performed.

In a case of RACH-less LTM, no RACH procedure after switching to a new target cell is performed, but only UL transmission (for example, PUSCH) based on dynamic grant or configured grant scheduling is performed.

For the first UL transmission after such cell switching, it is required to clarify how $f_{b,f,c}(k, l)$ for power control of a PUSCH is defined. Here, $f_{b,f,c}(k, l)$ may denote a PUSCH power control adjustment state for active UL BWP b of carrier f of serving cell c in transmission occasion k (k = 0, 1, ..., i).

{Analysis 4}

As described above, in a case of RACH-less handover, no RACH for a target cell is performed, and thus the UE performs UL transmission for the target cell, without adjusting power control of a PUSCH. In addition, although a power ramping number of a PRACH is taken into account for power control of the PUSCH, the power ramping is limited for a case of 2-step RACH, in an existing specification. In other words, it is assumed to apply such power control also to LTM.

As described in analyses 1 to 4, in Rel-18 LTM, if a method of path loss calculation/power control is not clear for a case that RACH-less handover is supported, no appropriate random access procedure may be performed, resulting in communication throughput reduction.

In view of this, the inventors of the present invention studied on path loss calculation/power control for a case that RACH-less handover is supported in Rel-18 LTM, and came up with the idea of an aspect of the present embodiment.

Embodiments according to the present disclosure will be described in detail with reference to the drawings as follows. Note that the embodiments/aspects (for example, respective cases) to be described below may each be used individually, or at least two of the embodiments/aspects may be employed in combination.

(Various Interpretations and so on)

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a cell, a PCI, a serving cell, an SpCell, a source serving cell (source cell), a reference cell, a CC, a BWP, a BWP in a CC, and a band may be interchangeably interpreted. In the present disclosure, an additional cell, another cell, a non-serving cell, a cell having a different PCI, a candidate cell, a candidate serving cell, a cell having a PCI different from a PCI of a current serving cell, another serving cell, a target cell, a target serving cell, and a neighbour cell may be interchangeably interpreted. In the present disclosure, switching, change, and update may be interchangeably interpreted. A serving cell may be interpreted as a serving cell before switching or a serving cell after switching. LTM application, cell application, cell switch, and handover may be interchangeably interpreted. LTM application, beam application, and beam switch may be interchangeably interpreted.

In the present disclosure, a RACH resource, an RA resource, a PRACH preamble, an occasion, a RACH occasion (RO), a PRACH occasion, a repetition resource, a repetition configuration resource, a resource configured for RO/repetition, a time instance and a frequency instance, a time resource and a frequency resource, an RO/preamble resource, repetition, a PRACH resource, a time/frequency resource for a PRACH, a preamble configuration/index, a mask configuration/index, and a PRACH configuration may be interchangeably interpreted.

In the present disclosure, a candidate cell and a candidate cell group may be interchangeably interpreted. A candidate cell in the present disclosure may be a candidate cell indicated in a PDCCH order. A PDCCH order and DCI (for example, DCI format 1_0) may be interchangeably interpreted. In the present disclosure, an RO, an RO index, and RO # may be interchangeably interpreted.

In the present disclosure, a RACH (procedure), a PRACH transmission triggered by a PDCCH order, a PDCCH ordered RACH, and RACH-less handover may be interchangeably interpreted. A RACH without RAR, a RACH without RAR monitoring, a PDCCH ordered RACH without RAR, and a PDCCH ordered RACH for LTM may be interchangeably interpreted. A RACH procedure/PRACH transmission without RAR monitoring may be interpreted as a RACH procedure/PRACH transmission not requiring RAR monitoring or RACH procedure/PRACH transmission where RAR monitoring is not requested.

In the present disclosure, RACH-less, without RAR, not requiring RAR monitoring, not applying RAR, not requiring RAR, and being for LTM may be interchangeably interpreted.

In the present disclosure, with RAR, requiring RAR monitoring, applying RAR, and requiring RAR may be interchangeably interpreted.

In the present disclosure, LTM, cell switching, and handover may be interchangeably interpreted.

In the present disclosure, a measurement result may be L1/L3-RSRP, for example.

The following description may be applied to inter-cell mobility (for example, L1/L2 inter-cell mobility) or may be applied to communication control other than inter-cell mobility. L1/L2 inter-cell mobility may be interpreted as at least one of cell switching, cell switch, and cell change.

(Radio Communication Method)

<First Embodiment>

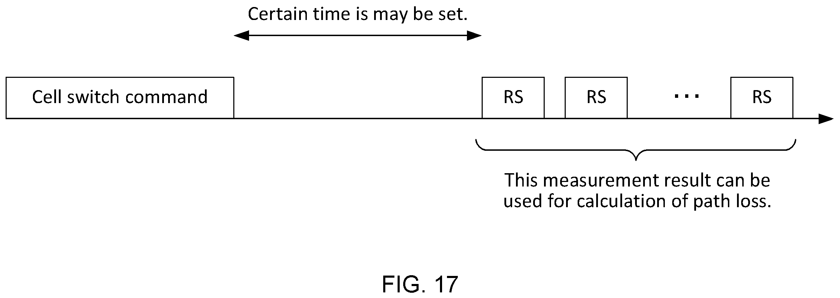

A first embodiment describes path loss calculation, corresponding to analyses 1 and 2 described above. FIG. 17 is a diagram to show an example of path loss calculation according to the first embodiment.

An SSB associated with a TCI state index (indicated TCI state) indicated in a cell switch command (MAC CE) may be measured after reception of the cell switch command and used for path loss calculation.

In other words, a UE may measure the SSB associated with the TCI state index indicated in the cell switch command (MAC CE), after receiving the cell switch command. Further, the UE may calculate a corresponding path loss by using the SSB such measured.

More specifically, as shown in FIG. 17, a UE may calculate a path loss, by using an SSB (measurement result) corresponding to one or a plurality of reference signals (RSs) received in the first slot, after elapse of a certain time after reception of a cell switch command. Here, the SSB is, as described above, associated with a TCI state index indicated in the cell switch command.

Such configurations enable the UE to accurately calculate a path loss, without storing or measuring in advance any parameter for path loss calculation.

The measurement result may be a result of one time of measurement (corresponding to one RS) or may be an average value of results of a plurality of times of measurement (corresponding to a plurality of RSs).

The number of measurement results used for path loss calculation may be configured/indicated by higher layer signaling/physical layer signaling, may be determined based on a UE capability, or may be defined in advance in a specification.

The certain time (certain period) after reception of the cell switch command described above may be configured/indicated by higher layer signaling/physical layer signaling, may be determined based on a UE capability, or may be defined in advance in a specification.

The first embodiment described above enables a UE to appropriately calculate a path loss, based on an SSB measured after reception of a cell switch command.

<Second Embodiment>

A second embodiment describes path loss calculation, corresponding to analyses 1 and 2 described above. FIG.

18 is a diagram to show an example of path loss calculation according to the second embodiment.

In a case where the UE-based TA measurement is used for acquisition of a TA for a target cell, a path loss may be calculated by using a measurement result of an RS of the target cell used for TA calculation.

In other words, in a case where the UE-based TA measurement is applied for acquisition of a TA for a target cell, a UE may calculate a corresponding path loss by using a measurement result of an RS of the target cell used for TA calculation.

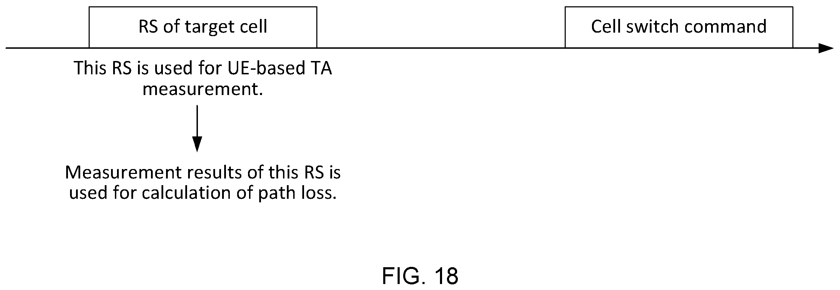

More specifically, as shown in FIG. 18, an RS with respect to a target cell received before reception of a cell switch command is used for the UE-based TA measurement. Then, the measurement result of the RS may be used for path loss measurement.

Such configurations, with a measurement result of another purpose (TA) used for path loss calculation, enable an interruption time to be reduced.

A UE may calculate a corresponding path loss by using a measurement result using the UE-based TA measurement, with an SSB associated with a TCI state index/target cell index indicated in a cell switch command.

In this case, the UE may hold/store a measurement result of an RS used for the measurement/path loss calculation.

The maximum number of measurement results possible to be held/stored may be configured/indicated by higher layer signaling/physical layer signaling, may be determined based on a UE capability, or may be defined in advance in a specification.

The measurement result may be held/stored per candidate cell/per RS index.

In a case of applying the UE-based TA measurement, the first embodiment described above may be applied.

The second embodiment described above enables a UE to appropriately calculate a path loss, based on a TA measurement result measured before reception of a cell switch command.

<Third Embodiment>

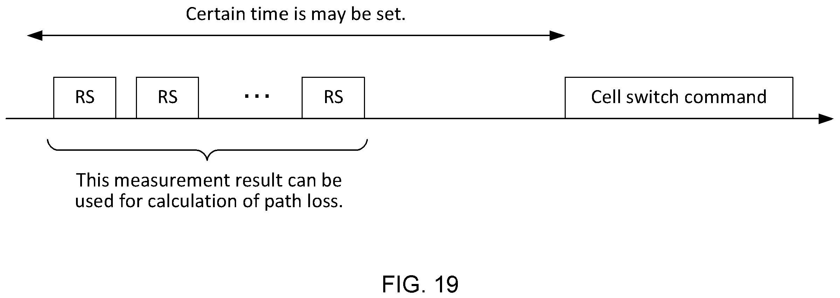

A third embodiment describes path loss calculation, corresponding to analyses 1 and 2 described above. FIG. 19 is a diagram to show an example of path loss calculation according to the third embodiment.

A measurement result, before reception of a cell switch command, with respect to an RS associated with a target cell index/TCI state index indicated in the cell switch command may be used for path loss calculation.

In other words, a UE may measure the RS associated with the target cell index/TCI state index indicated in the cell switch command, before receiving the cell switch command.

More specifically, as shown in FIG. 19, a UE may calculate a path loss by using a measurement result corresponding to one or a plurality of reference signals (RSs) received in (within) a certain time before reception of a cell switch command.

Such configurations, allowing a path loss to be calculated based on a measurement result before reception of a cell switch command, enable an interruption time to be reduced.

A UE may calculate a corresponding path loss by using a latest SSB measurement result received before reception of a cell switch command. The SSB may be associated with a TCI state index indicated in the cell switch command.

The measurement result may be a result of one time of measurement (corresponding to one RS) or may be an average value of results of a plurality of times of measurement (corresponding to a plurality of RSs).

The number of (SSB) measurement results used for path loss calculation may be configured/indicated by higher layer signaling/physical layer signaling, may be determined based on a UE capability, or may be defined in advance in a specification.

The (SSB) measurement results may be limited to results within a certain time before reception of the cell switch command. In other words, the certain time (certain period) before reception of the cell switch command described above may be configured/indicated by higher layer signaling/physical layer signaling, may be determined based on a UE capability, or may be defined in advance in a specification.

The UE may hold/store a measurement result of an RS used for the path loss calculation.

The maximum number of measurement results possible to be held/stored may be configured/indicated by higher layer signaling/physical layer signaling, may be determined based on a UE capability, or may be defined in advance in a specification.

The measurement result may be held/stored per candidate cell/per RS index.

The third embodiment described above enables a UE to appropriately calculate a path loss, based on a measurement result before reception of a cell switch command.

<Fourth Embodiment>

A fourth embodiment describes a power control adjustment state, corresponding to analysis 3 described above.

After successful cell switching in LTM, PUSCH power control adjustment state (, $f_{b,f,c}(k, l)$) may be reset to 0.

A UE may reset, after successful cell switching, PUSCH power control adjustment state ($f_{b,f,c}(k, l)$) to 0, for a new target cell indicated in a cell switch command. A condition for such reset is described below.

A UE may reset PUSCH power control adjustment state ($f_{b,f,c}(k, l)$), for active UL BWP b of carrier f of serving cell c in transmission occasion k, to 0, in a case where at least one of the following conditions is satisfied.

<Condition 1>

A case that a configuration corresponding to a value of $P_{O\_PUSCH,b,f,c}(j)$ or $P_{O\_UE\_PUSCH,b,f,c}(j)$ is provided by a higher layer.

<Condition 2>

A case that a configuration corresponding to a value of $\alpha_{b,f,c}(j)$ is provided by a higher layer.

<Condition 3>

A case that the UE performs (succeeds in), after having received a cell switch command (MAC CE) for LTM, cell switching by an LTM procedure.

<Variations of Condition>

Furthermore, the following conditions may be added to/substituted for conditions 1 to 3 described above.

- a case that the UE receives a cell switch command (MAC CE) for LTM
- a case that MAC reset is performed (for LTM)
- a case that the UE judges the LTM procedure is successfully completed

The fourth embodiment described above enables a UE to appropriately reset a power control adjustment state, based on a specific condition, in a case where cell switching is successful.

<Fifth Embodiment>

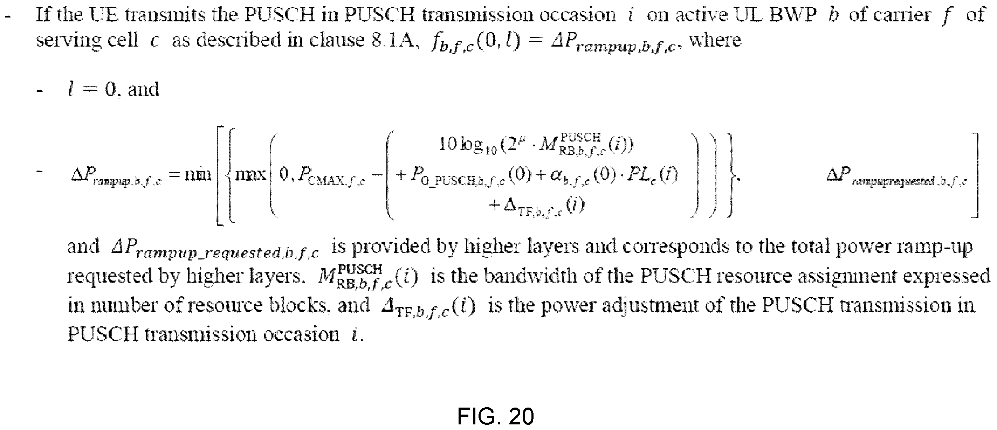

A fifth embodiment describes power ramping, corresponding to analysis 4 described above. FIG. 20 is a diagram to show an example of calculation related to power ramping according to the fifth embodiment.

In a case where a PDCCH ordered RACH is applied for acquisition of a TA for a target cell, a UE may take a power ramping number of a PRACH into account for power control of a PUSCH.

Such a configuration enables an interruption time to be reduced. In addition, this enables successful transmitted power to be applied for a gNB, making it unnecessary to configure any separate parameter by higher layer signaling (RRC).

In this case, the UE may hold/store the power.

The present embodiment is applicable to the first PUSCH transmission for a target cell after reception of a cell switch command.

The total power ramping number may be used for a PDCCH ordered RACH that indicates an SSB associated with a TCI state index/candidate cell index (target cell index) indicated in a cell switch command (MAC CE).

As shown in FIG. 20, in a case where a UE transmits a PUSCH in PUSCH transmission occasion i on active UL BWP b of carrier f of serving cell c, $f_{b,f,c}(0, l) = \Delta P_{rampup,b,f,c}$.

Here, $\Delta P_{rampup,b,f,c}$ is provided by higher layers and corresponds to the total power ramp-up requested by higher layers. $M_{RB,b,f,c}^{PUSCH}(i)$ is the bandwidth of the PUSCH resource assignment expressed in number of resource blocks. $\Delta_{TF,b,f,c}$ is the power adjustment of the PUSCH transmission in PUSCH transmission occasion i.

The fifth embodiment described above enables a UE to appropriately control power ramping in LTM.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:

- supporting of specific processing/operation/control/information for at least one of the embodiments above
- supporting of two TAs for multi-TRP
- supporting of two TAs for intra-cell multi-TRP (for example, intra-cell M-TRP)
- supporting of two TAs for inter-cell multi-TRP (for example, inter-cell M-TRP)
- supporting of L1/L2 inter-cell mobility
- supporting of PDCCH monitoring for a candidate cell/deactive candidate cell/deactive SCell
- supporting of the maximum number of cells/TAGs/reference CCs subjected to PDCCH monitoring
- supporting of a cross-carrier (cross-CC) PDCCH order
- supporting of an existing PDCCH ordered RACH and a PDCCH ordered RACH for LTM
- supporting of a PDCCH ordered RACH with/without RAR
- supporting of RACH-less handover
- supporting of path loss calculation for LTM
- supporting of UE-based TA measurement
- supporting of power ramping for LTM

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of LTM, any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Notes)

Regarding one embodiment of the present disclosure (the first to third embodiments), the following supplementary notes of the invention are given.

{Supplementary Note 1}

A terminal including:

a receiving section that receives a cell switch command including information related to a target cell to be a candidate for serving cell switching; and
a control section that controls path loss calculation, based on a measurement result of a reference signal before or after reception of the cell switch command.

{Supplementary Note 2}

The terminal according to supplementary note 1, wherein the control section controls the path loss calculation, by using a result of timing advance measurement before reception of the cell switch command.

{Supplementary Note 3}

The terminal according to supplementary note 1 or 2, wherein the control section controls the path loss calculation, based on a measurement result of a reference signal associated with a target cell index or a transmission configuration indication state (TCI) index indicated in the cell switch command.

{Supplementary Note 4}

The terminal according to any one of supplementary notes 1 to 3, wherein the control section controls the path loss calculation, by using a measurement result in a certain time before or after reception of the cell switch command.

(Supplementary Notes)

Regarding one embodiment of the present disclosure (the fourth to fifth embodiments), the following supplementary notes of the invention are given.

{Supplementary Note 1}

A terminal including:

a receiving section that receives a cell switch command including information related to a target cell to be a candidate for serving cell switching; and
a control section that controls a power control adjustment state for the target cell indicated in the cell switch command or power ramping.

{Supplementary Note 2}

The terminal according to supplementary note 1, wherein the control section resets, after successful cell switching, the power control adjustment state for the target cell, based on a specific condition.

{Supplementary Note 3}

The terminal according to supplementary note 1 or 2, wherein the control section resets, after successful cell switching, the power control adjustment state for the target cell, based on whether a cell switch command is received or whether MAC reset is performed.

{Supplementary Note 4}

The terminal according to any one of supplementary notes 1 to 3, wherein the control section controls the power ramping taking account of a power ramping number, in a case of applying random access triggered by a downlink control channel order in order to acquire a timing advance for the target cell.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

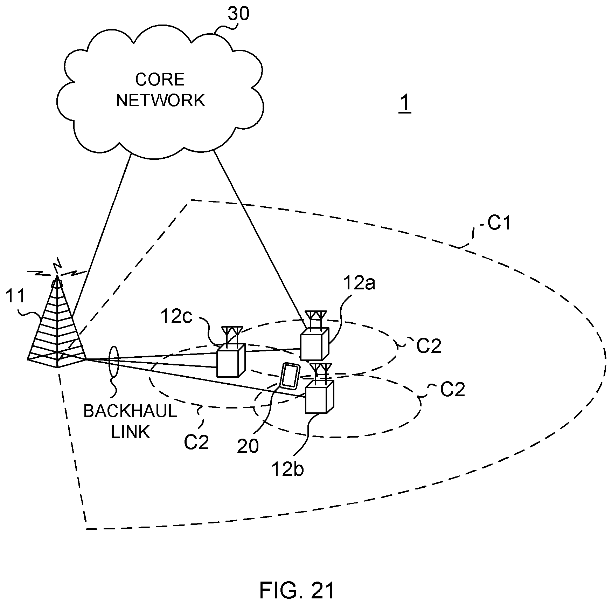

FIG. 21 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

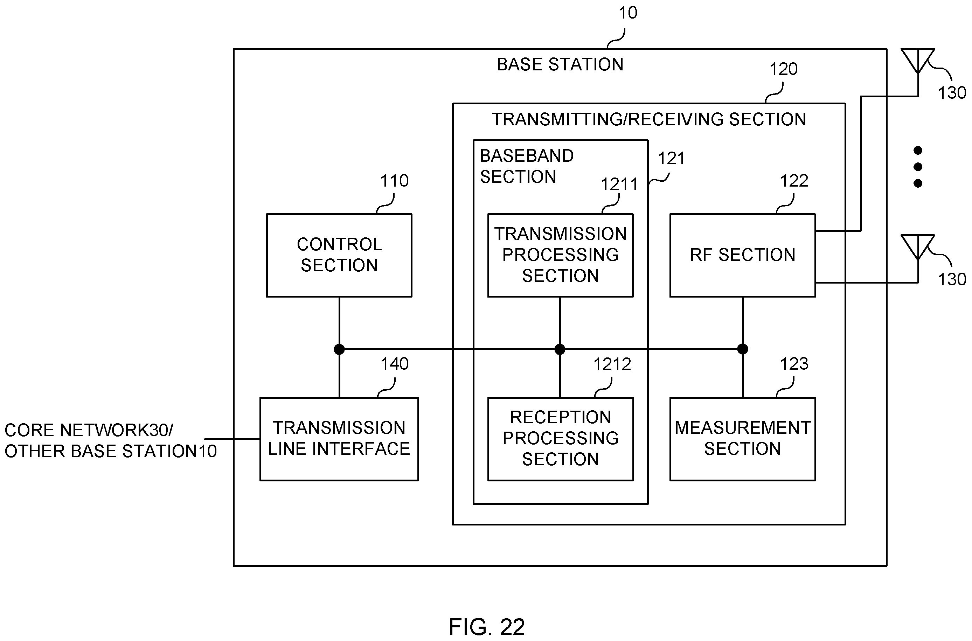

FIG. 22 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and receive beam by using digital beam forming (for example, precoding), analog beam forming (for example, phase rotation), or the like.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a cell switch command including information related to a target cell to be a candidate for serving cell switching. The control section 110 may control path loss calculation, based on a measurement result of a reference signal before or after reception of the cell switch command. The control section 110 may control a power control adjustment state for the target cell indicated in the cell switch command or power ramping.

(User Terminal)

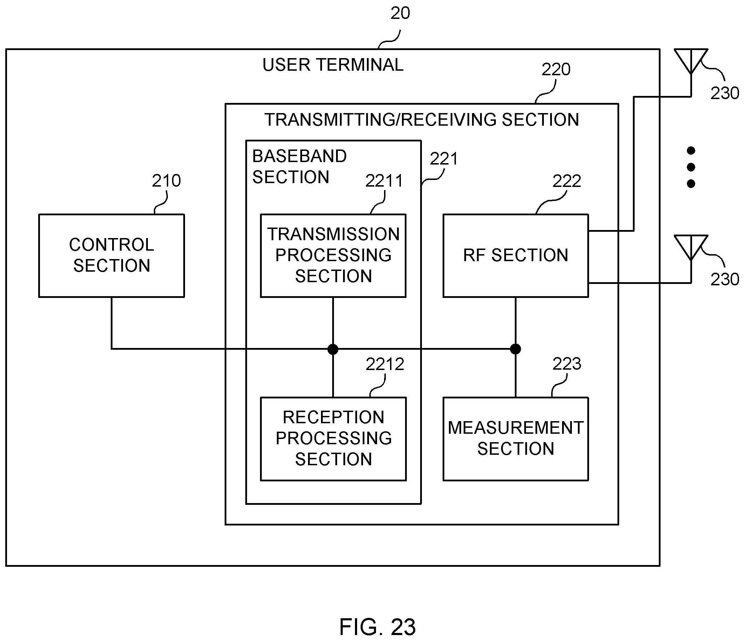

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and receive beam by using digital beam forming (for example, precoding), analog beam forming (for example, phase rotation), or the like.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a target cell to be a candidate for serving cell switching. The control section 210 may control, based on the information, a physical random access channel transmission triggered by a downlink control channel order (PDCCH ordered RACH). In a case where the information includes an indication related to application of PDCCH ordered RACH without random access response (RAR), the control section 210 may apply the PDCCH ordered RACH without RAR.

The transmitting/receiving section 220 may receive a cell switch command including information related to a target cell to be a candidate for serving cell switching. The control section 210 may control path loss calculation, based on a measurement result of a reference signal before or after reception of the cell switch command. The control section 210 may control the path loss calculation, by using a result of timing advance measurement before reception of the cell switch command. The control section 210 may control the path loss calculation, based on a measurement result of a reference signal associated with a target cell index or a transmission configuration indication state (TCI) index indicated in the cell switch command. The control section 210 may control the path loss calculation, by using a measurement result in a certain time before or after reception of the cell switch command.

The control section 210 may control a power control adjustment state for the target cell indicated in the cell switch command or power ramping. The control section 210 may reset, after successful cell switching, the power control adjustment state for the target cell, based on a specific condition. The control section 210 may reset, after successful cell switching, the power control adjustment state for the target cell, based on whether a cell switch command is received or whether MAC reset is performed. The control section 210 may control the power ramping taking account of a power ramping number, in a case of applying random access triggered by a downlink control channel order in order to acquire a timing advance for the target cell.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

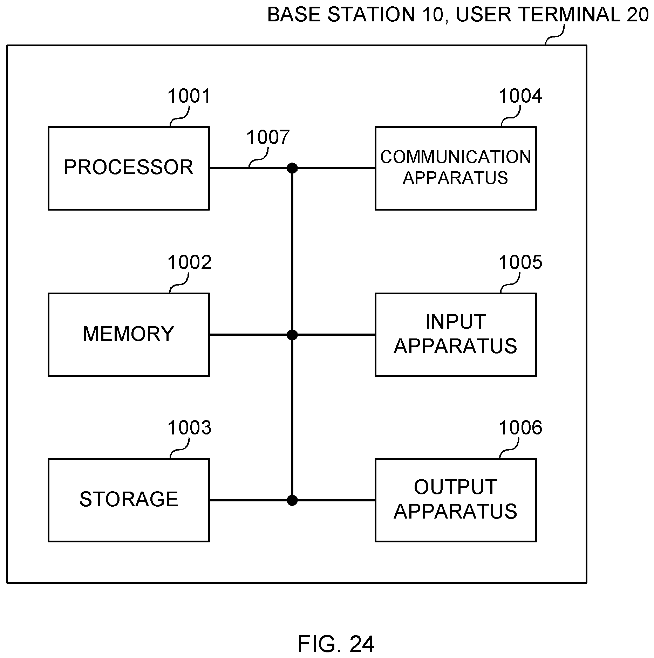

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware (at least one of these hardware).

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

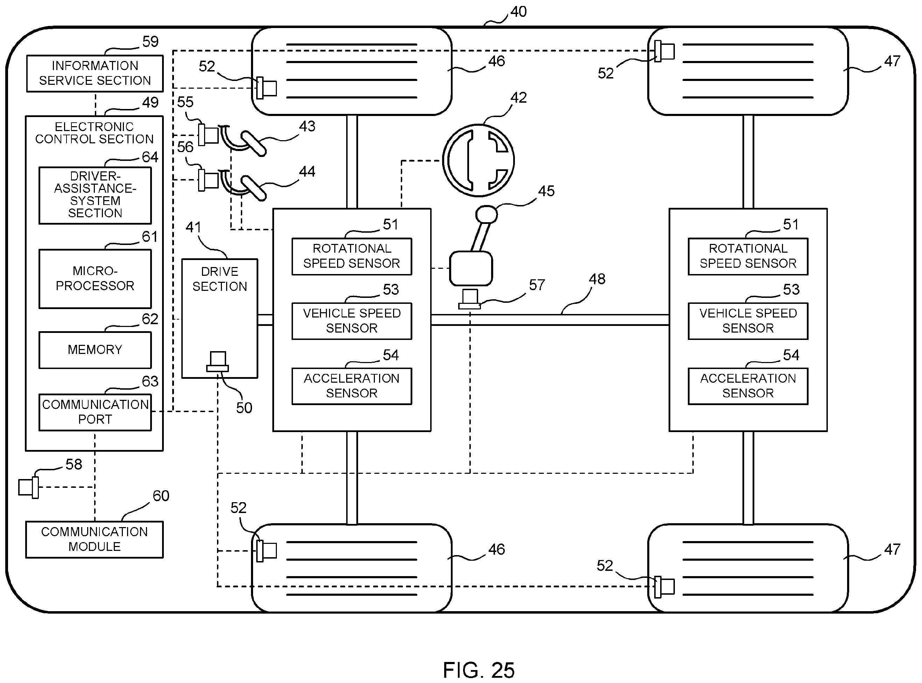

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information (various information) such as driving information, traffic information, and entertainment information, such as a car navigation system, an audio system, a speaker, a display, a television, and a radio; and one or more ECUs that control these devices. The information service section 59 provides various pieces of information/services (various information/services) (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-137356, filed on August 25, 2023, the contents of which are incorporated herein by reference in their entirety.

## Claims

1. A terminal comprising:

   a receiving section that receives a cell switch command including information related to a target cell to be a candidate for serving cell switching; and
   a control section that controls path loss calculation, based on a measurement result of a reference signal before or after reception of the cell switch command.

2. The terminal according to claim 1, wherein
   the control section controls the path loss calculation, by using a result of timing advance measurement before reception of the cell switch command.

3. The terminal according to claim 1, wherein
   the control section controls the path loss calculation, based on a measurement result of a reference signal associated with a target cell index or a transmission configuration indication state (TCI) index indicated in the cell switch command.

4. The terminal according to claim 1, wherein
   the control section controls the path loss calculation, by using a measurement result in a certain time before or after reception of the cell switch command.

5. A radio communication method for a terminal, the radio communication method comprising:

   receiving a cell switch command including information related to a target cell to be a candidate for serving cell switching; and
   controlling path loss calculation, based on a measurement result of a reference signal before or after reception of the cell switch command.

6. A base station comprising:

   a transmitting section that transmits a cell switch command including information related to a target cell to be a candidate for serving cell switching; and
   a control section that controls path loss calculation, based on a measurement result of a reference signal before or after reception of the cell switch command.

FIG. 1A

PCI#1    PCI#3

System Information

UE dedicated CH

SERVING CELL    ADDITIONAL CELL

SERVING CELL SWITCHING BY L1/L2
NOT SUPPORTED

FIG. 1B

REL.18 OR LATER

PCI#1    PCI#3

System Information

UE dedicated CH

CURRENT SERVING CELL    NEW SERVING CELL
(TARGET SERVING CELL)

SERVING CELL SWITCHING BY L1/L2
SUPPORTED

EP 4 770 215 A1

FIG. 2

FIG. 3

EP 4 770 215 A1

MAC entity/MCG/SCG

Frequency

SpCell#0 — Candidate cell#0-1    Candidate cell#0-2    Candidate cell#0-3

SCell#1 — Candidate cell#1-1

SCell#2 — Candidate cell#2-1    Candidate cell#2-2

FIG. 4

FIG. 5A

Frequency

cellGroupId: 0

SpCell#0  #3  #6  #8

SCell#1  #4

SCell#2  #5  #7

FIG. 5B

Frequency

Candidate cell group  Candidate cell group  Candidate cell group

cellGroupId: 0  cellGroupId: 1  cellGroupId: 2  cellGroupId: 3

SpCell#0  #3  #6  #8

SCell#1  #4

SCell#2  #5  #7

EP 4 770 215 A1

FIG. 6

FIG. 7

FIG. 8

EP 4 770 215 A1

FIG. 9

FIG. 10

UE

Source
cell/cell group

Candidate
cells/cell groups

Candidate cell configuration

PDCCH order

PRACH

Initial cell switch

TA maintenance

Cell switch command
(TA indication)

First UL TX = initial TA

Next cell switch

FIG. 11

| DCI fields | Number of bits |
|---|---|
| Identifier for DCI formats | Identifier for DCI formats |
| Frequency domain resource assignment | Depending on RB of DL BWP |
| Random access preamble index | 6 |
| UL/SUL indicator | 1 |
| SS/PBCH index | 6 |
| PRACH mask index | 4 |
| Reserved bits | 12 or 10 |

FIG. 12

FIG. 13

| TAG ID | Timing Advance Command | Oct 1 |

FIG. 14

| R | R | R | R | Timing Advance Command | Oct 1 |
|---|---|---|---|---|---|
| Timing Advance Command | | | | | Oct 2 |

FIG. 15

FIG. 16

EP 4 770 215 A1

Certain time is may be set.

| Cell switch command | | RS | RS | ・・・ | RS |

This measurement result can be
used for calculation of path loss.

FIG. 17

| RS of target cell | | Cell switch command |

This RS is used for UE-based TA
measurement.

↓

Measurement results of this RS is
used for calculation of path loss.

FIG. 18

Certain time is may be set.

RS | RS | ... | RS | Cell switch command

This measurement result can be
used for calculation of path loss.

FIG. 19

- If the UE transmits the PUSCH in PUSCH transmission occasion $i$ on active UL BWP $b$ of carrier $f$ of serving cell $c$ as described in clause 8.1A, $f_{b,f,c}(0,l) = \Delta P_{rampup,b,f,c}$, where

  - $l = 0$, and

  - $$\Delta P_{rampup,b,f,c} = \min\left[\left\{\max\left(0, P_{\text{CMAX},f,c} - \left(\begin{array}{c} 10\log_{10}(2^{\mu} \cdot M_{\text{RB},b,f,c}^{\text{PUSCH}}(i)) \\ + P_{\text{O\_PUSCH},b,f,c}(0) + \alpha_{b,f,c}(0) \cdot PL_c(i) \\ + \Delta_{\text{TF},b,f,c}(i) \end{array}\right)\right)\right\}, \quad \Delta P_{rampuprequested,b,f,c}\right]$$

  and $\Delta P_{rampup\_requested,b,f,c}$ is provided by higher layers and corresponds to the total power ramp-up requested by higher layers, $M_{\text{RB},b,f,c}^{\text{PUSCH}}(i)$ is the bandwidth of the PUSCH resource assignment expressed in number of resource blocks, and $\Delta_{\text{TF},b,f,c}(i)$ is the power adjustment of the PUSCH transmission in PUSCH transmission occasion $i$.

FIG. 20

FIG. 21

FIG. 22

EP 4 770 215 A1

FIG. 23

BASE STATION 10, USER TERMINAL 20

FIG. 24

FIG. 25

## INTERNATIONAL SEARCH REPORT

| International application No. |
| --- |
| **PCT/JP2024/029849** |

| | | |
| --- | --- | --- |
| **A.** | **CLASSIFICATION OF SUBJECT MATTER** | |

*H04W 52/38*(2009.01)i; *H04W 16/28*(2009.01)i; *H04W 24/10*(2009.01)i; *H04W 36/08*(2009.01)i; *H04W 52/22*(2009.01)i; *H04W 72/231*(2023.01)i
FI:   H04W52/38; H04W36/08; H04W24/10; H04W52/22; H04W72/231; H04W16/28

According to International Patent Classification (IPC) or to both national classification and IPC

| | | |
| --- | --- | --- |
| **B.** | **FIELDS SEARCHED** | |

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| X | Nokia, Nokia Shanghai Bell, Title, 3GPP TSG RAN WG1 #113 R1-2305157, 26 May 2023 in particular, sections 1, 2.1.1 | 1, 4-6 |
| Y | | 3 |
| A | | 2 |
| X | Fujitsu, LTM cell switch execution and completion, 3GPP TSG RAN WG2 #123 R2-2307398, 11 August 2023 in particular, section 2.3 | 1, 4-6 |
| Y | | 3 |
| A | | 2 |
| Y | Huawei, HiSilicon, L1 enhancements for inter-cell beam management, 3GPP TSG RAN WG1 #112b-e R1-2302368, 26 April 2023 in particular, section 4.2 | 3 |

☐ Further documents are listed in the continuation of Box C.       ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 October 2024** | **05 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023137356 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010